(19) Europäisches Patentamt
European Patent Office
Office européen des brevets

(11) **EP 2 236 380 B1**

(12) **EUROPEAN PATENT SPECIFICATION**

(45) Date of publication and mention
of the grant of the patent:
**11.12.2013 Bulletin 2013/50**

(51) Int Cl.:
***B61D 15/06*** (2006.01)   ***B61D 17/06*** (2006.01)
***B60R 19/34*** (2006.01)   ***F16F 7/12*** (2006.01)

(21) Application number: **09251771.3**

(22) Date of filing: **10.07.2009**

(54) **Railway vehicle having shock absorbing device**

Schienenfahrzeug mit Stoßverzehrvorrichtung

Véhicule ferroviaire doté d'un dispositif amortissement de choc

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.03.2009 JP 2009087121**

(43) Date of publication of application:
**06.10.2010 Bulletin 2010/40**

(73) Proprietor: **Hitachi, Ltd.**
**Tokyo 100-8280 (JP)**

(72) Inventor: **Kawasaki, Takeshi**
**Tokyo 100-8220 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A2- 1 251 054      DE-A1- 19 631 901**
**DE-A1- 19 833 250      US-A- 6 003 930**

## Description

BACKGROUND OF THE INVENTION

Field of the invention

The present invention relates to railway vehicles such as railway cars, streetcars, monorail cars and new urban transportations having shock absorbing devices composed of energy absorbers.

Description of the related art

Railway vehicles such as railway cars may possibly collide unexpectedly against objects during travel. In the past, for example, railway cars have collided against a large variety of large-size objects such as road vehicles, trees and other railway vehicles, and small-size objects such as rocks, snow chunks and parts of oncoming vehicles.

Now, we will consider a case where the railway vehicle collides against a large-sized object. When the railway vehicle collides against a large object, a large impact is applied to the railway car by the collision. One possible idea for protecting the crew and passengers on the railway car from such impact is to actively deform a portion of the structure of the railway car so as to absorb the energy of collision. According to this idea, the structure of the transport machine is divided into two portions, one is a space in which the crew and passengers are on board and which must not be crushed during collision with an object (hereinafter referred to as "survival zone"), and the other is a space in which the structure of the transport machine is deformed actively so as to absorb the energy of collision during collision with an object (hereinafter referred to as "crushable zone").

Japanese patent application laid-open publication No. 2007-302081 discloses a shock absorbing device of a railway vehicle in which a flying object protection plate is disposed on a leading end portion of a driver's cab arranged at the longitudinal end of a car body, such as in a leading car or in a rear car, and energy absorbers are passed through windows formed on the flying object protection plate to be extended from the driver's cab to beyond the flying object protection plate. The document discloses using the space of the driver's cab in the car body to arrange energy absorbers having high absorptive capacity in a highly efficient manner. The crushing direction of the shock absorbing device is aligned with the longitudinal direction of the car body, and the energy of collision is absorbed by the energy absorbers crushed via repeated small-scale buckling. Further, the beam member of the crushable zone including the flying object protection plate can be designed strongly and connected to the survival zone.

Shock absorbing devices have energy absorbing structures composed of pipe-like bodies formed of metal materials such as iron and aluminium or of materials combining such metal materials, and the energy absorbing structures are arranged so that the axes of the pipe-like bodies are aligned in the longitudinal direction of the car body. When the railway vehicle experiences collision, the energy absorbers start crushing via an elastic deformation zone in the axial direction in a plastic deformation zone, and relieve the impact applied on the railway vehicle by absorbing the collision energy in the crushing process.

At this time, the load in which deformation is started can be expressed by the following expression (1).

$$F = \sigma_y \times A \quad \text{(expression 1)}$$

Here, F represents crushing load, $\sigma_y$ represents yield stress, and A represents a cross-sectional area of a smallest cross section in an energy absorber.

Based on the above expression (1), when the cross-sectional area A orthogonal to the longitudinal direction of all the energy absorbers is the same throughout the whole body, the crushing load F becomes equal in all areas. Therefore, when load was applied on such energy absorber during collision, it was difficult to specify the location at which deformation starts, and it was impossible to control the crushing mode. Further, there was fear that the safety of the crew may be deteriorated since the peak load at the time the collision started became excessive.

Therefore, one problem to be solved is to control the cross-sectional area orthogonal to the longitudinal direction of the energy absorber so as to minimize the peak load (acceleration) observed during collision in a railway vehicle.

DE-A-19833250 and EP-A-1 251 054 show energy absorbing structures for railway vehicles, having pipe-like bodies which have a portions of reduced cross-section at the leading end.

SUMMARY OF THE INVENTION

The present invention aims at solving the problems of the prior art by providing a shock absorbing device capable of minimizing the peak load during collision and reducing the impact force (acceleration) applied on the passengers and crew, by starting and promoting the crushing of the energy absorber immediately after the occurrence of a collision when the energy absorber receives compressive load and is subjected to elastic deformation.

In order to solve the above-mentioned problems of the prior art, the present invention provides a railway vehicle having a shock absorbing device as set out in claim 1.

According to the railway vehicle having the shock absorbing device described above, when the energy absorber of the shock absorbing device receives compressive load during collision, the energy absorber starts to collapse via an elastic deformation zone from the portion having a small perpendicular cross-sectional area with respect to the longitudinal direction of the energy absorber (the portion closer to the collision surface). Thereafter, the portions having a greater perpendicular cross-sectional area with respect to the longitudinal direction of the energy absorber are sequentially collapsed in continuous manner. Such mechanism of sequential collapse enables the whole body of the energy absorber to crush, preventing increase of peak load during collision.

Since the railway vehicle having the shock absorbing device according to the present invention is arranged as above, when the energy absorber constituting the shock absorbing device receives compressive load during collision, the energy absorber starts to collapse gradually from the portion having a small perpendicular cross-sectional area with respect to the longitudinal direction of the energy absorber (the portion closer to the collision surface) via an elastic deformation zone to the portion having a greater perpendicular cross-sectional area. Therefore, the crushing of the energy absorber is started and promoted when the load is still small, so that the peak load occurring during collision is prevented from being increased, and as a result, the impact applied on the passengers and crew can be relieved.

Furthermore, since the peak load occurring during collision can be suppressed, the strength of the portion of the railway car body to which the shock absorbing device is attached (such as the underframe) can be reduced, enabling the structure to be simplified and reduced in weight.

BRIEF DESCRIPTION OF THE DRAWINGS

FIG. 1 is a perspective view showing a relevant portion of a railway vehicle having a shock absorbing device having a portion of reducing cross-section;
FIG. 2 is a perspective view showing a relevant portion of the railway vehicle having another shock absorbing device having a portion of reducing cross-section;
FIG. 3 is a cross-sectional view taken at line A-A of the shock absorbing device of FIG. 2;
FIG. 4 is a cross-sectional view taken at line B-B of the shock absorbing device of FIG. 2;
FIG. 5 is a graph showing the effect of reducing peak load during collision of the shock absorbing device having a portion of reducing cross-section;
FIG. 6 is an upper view showing an example of yet another shock absorbing device having a portion of reducing cross-section;
FIG. 7 is a perspective view showing a railway vehicle;
FIG. 8 is a front view showing a first embodiment of the railway vehicle having the shock absorbing device according to the present invention applied to a car end structure;
FIG. 9 is a perpendicular cross-sectional view of the car end structure including a portion of the shock absorbing device shown in FIG. 8 (cross-section taken at C-C of FIG. 8);
FIG. 10 is a horizontal cross-sectional view showing a portion of the shock absorbing device illustrated in FIG. 8 (cross-section taken at D-D of FIG. 8);
FIG. 11 is a bottom cross-sectional view showing the front right half of a leading car of the railway vehicle according to a second embodiment of the present invention (cross-section taken at Y-Y of FIG. 12);
FIG. 12 is a vertical cross-sectional view showing a portion of the leading car illustrated in FIG. 11 (cross-section taken at Z-Z of FIG. 11);
FIG. 13 is a horizontal cross-sectional view showing a portion of the leading car illustrated in FIG. 11 (cross-section taken at X-X of FIG. 12);
FIG. 14 is a front view showing one example of the energy absorber;
FIG. 15 is a cross-sectional view showing one example of an energy absorber in a crushed state; and
FIG. 16 is a graph illustrating the effect of reducing the peak load when the leading ends of the energy absorbers in the longitudinal direction are arranged at dispersed positions.

DETAILED DESCRIPTION OF THE PREFERRED EMBODIMENTS

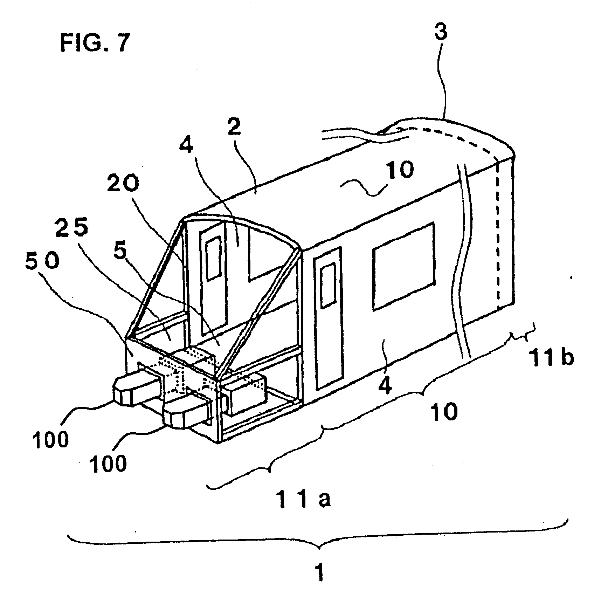

Now, the preferred embodiments of a railway vehicle having a shock absorbing device according to the present invention will be described with reference to the drawings. First, the arrangement of a railway car structure will be described with reference to FIG. 7. FIG. 7 is a perspective view illustrating an example of a railway car. The railway car structure 1 is composed of a roof structure 2 constituting the roof of the car body, end structures 3 defining the planes closing both longitudinal ends of the car body, side structures 4 forming left and right sides of the car body with respect to the longitudinal direction, and an underframe 5 defining the floor surface. The underframe 5 has a high rigidity with respect to the compressive load in the longitudinal direction. Openings corresponding to windows and doors are formed on the side structures 4. The railway car structure 1 having the basic structures described above is composed of a survival zone 10 capable of protecting the lives of passengers and crew during collision, and a crushable zone 11 (11a, 11b) for absorbing the energy generated during collision. An opening 20 surrounded by the ends of the roof structure 2, the side structures 4 and the underframe 5 is formed on the end of the survival zone 10 adjacent to the crushable zone 11. Further, a driver's cab 25 is arranged in the crushable zone 11 when a crew such as a driver for driving the railway car is seated.

Crushable zones 11 are arranged at both longitudinal ends of the car, having the survival zone 10 longitudinally sandwiched therebetween. The arrangement in the drawing illustrates a car having a driver's cab 25 as an example, but a car without the driver's cab 25 is also composed of crushable zones 11 and a survival zone 10 relatively arranged in the same manner. The crushable zone 11a has a flat plate-shaped flying object protection plate 50 having its in-plane orientation arranged orthogonally with respect to the traveling direction at the end of the driver's cab 25 in the direction of travel. Further in the crushable zone 11a, two energy absorbing devices 100 and 100 respectively having energy absorbing functions are arranged to pass through the flying object protection plate 50, separated from one another in the width direction of the car body.

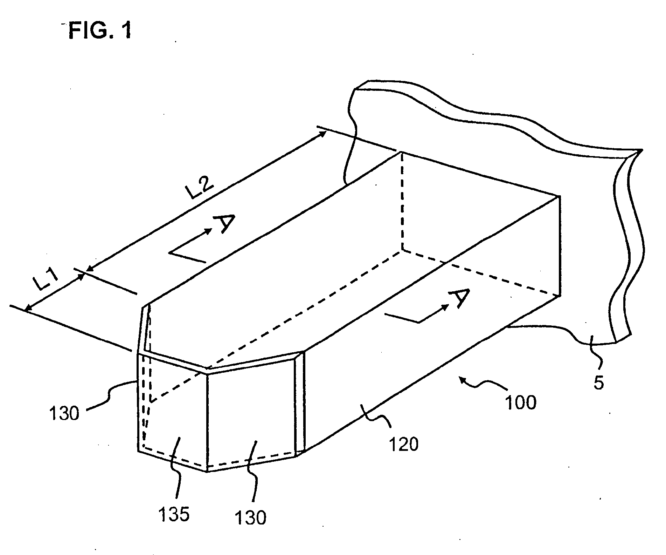

The shock absorbing devices 100 illustrated in FIGS. 1 through 4 are described here for reference and are devices attached to ends of railway vehicles, and in the illustrated example of a railway car of FIG. 7, not only are they applicable to the ends of the leading car or the last car, they are also applicable to ends of intermediate cars in a train set. A train set is composed of leading cars arranged on the front and rear, and the necessary number of intermediate cars arranged therebetween. For example, when the leading car (including the last car) collides against an obstacle or another car, not only the leading car and the adjacent intermediate car but also the mutually adj acent intermediate cars collide against one another sequentially. By providing the collision energy absorbing devices to all the ends of the leading cars and intermediate cars, the collision occurring anywhere in the train set or the secondary collision occurring between intermediate cars can be respectively absorbed by these collision energy absorbing devices.

The energy absorbing device 100 has an energy absorber 120 that absorbs the collision energy by crushing. The energy absorber 120 has a long pipe-like structure as shown in the drawing, and preferably, it is arranged so that its longitudinal direction corresponds to the longitudinal direction of the car body and the base portion is fixed to an end of an underframe 5 of each car having high rigidity, so that the energy absorber 120 is supported in a cantilever to the car body. The illustrated shock absorbing device 100 is composed of a single energy absorber 120, but it is more preferable to arrange a plurality of energy absorbers 120 in the width direction of the car body as illustrated in FIG. 7, so as to relieve the impact of collision by absorbing energy in a wide area and increasing the energy absorption quantity.

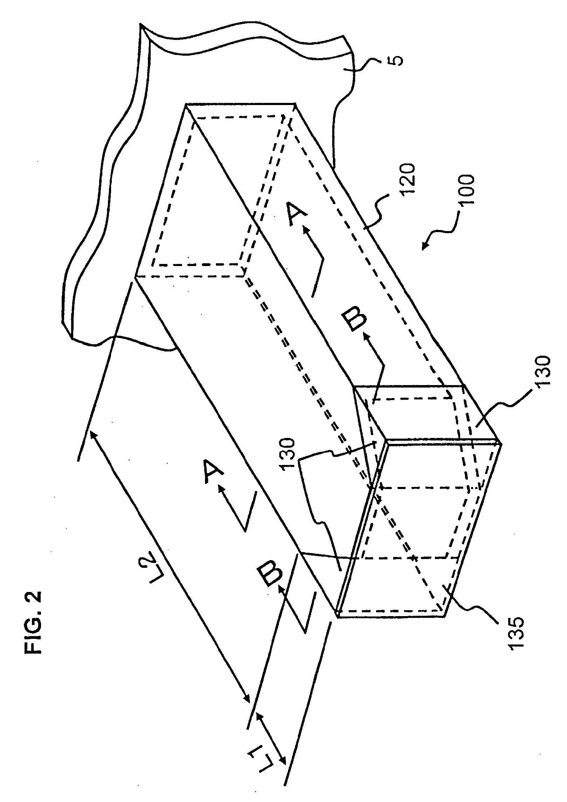

As shown in FIG. 1, the energy absorber 120 constituting the shock absorbing device 100 is a pipe-like member having a hollow space formed in the interior thereof (the details thereof will follow), and one longitudinal end thereof is attached to the underframe 5 of the car body in a cantilever, that is, in a transverse state. Furthermore, the energy absorber 120 is composed of a portion where the perpendicular cross-sectional area thereof is constant in the longitudinal direction from the direction of the underframe 5 toward the end of the energy absorber (base end portion, area illustrated as L2 in FIGS. 1 and 2), and a portion where the perpendicular cross-sectional area thereof is gradually decreased (leading end portion, area illustrated as L1 in FIGS. 1 and 2). In the portion where the perpendicular cross-sectional area of the energy absorber 120 decreases in the longitudinal direction, closing plates 130 and an end closing plate 135 are fixed via welding or the like so that the energy absorber 120 has a box-shaped arrangement, in order to ensure rigidity and to prevent rain water or the like from entering the energy absorber 120.

As described, the energy absorber 120 is fixed in the state of a cantilever to the railway car structure (such as the underframe 5), it is preferable that the portion of the member 120 in which the perpendicular cross-sectional area in the longitudinal direction is constant (area L2 of FIGS. 1 and 2, hereinafter referred to as "main body portion L2") is arranged toward the railway car structure. Further, the portion of the energy absorber 120 in which the perpendicular cross-sectional area in the longitudinal direction gradually decreases (area L1 of FIGS. 1 and 2, hereinafter referred to as "leading end portion L1") can have its cross-sectional area vary continuously or vary in steps.

FIG. 2 is a perspective view showing in frame format the relevant portion of the railway car having another shock absorbing device. The energy absorber 120 constituting the shock absorbing device 100 illustrated in FIG. 2 is basically the same as the energy absorber 120 illustrated in FIG. 1, but in the area of the leading end portion L1, the four sides at the leading end portion of the energy absorber 120 are covered by the closing plate 130, and the end surface at the leading end portion L1 of the energy absorber 120 (plane perpendicular to the longitudinal direction) is covered by an end portion closing plate 135. The illustrated construction does not have a significant influence on the energy absorption quantity of the energy absorber 120, but it is effective such as when it is necessary to improve the design property of the energy absorber disposed on the railway car structure.

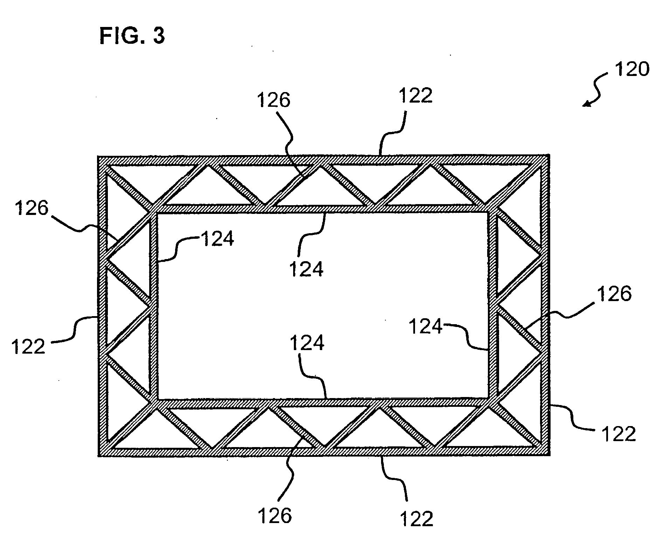

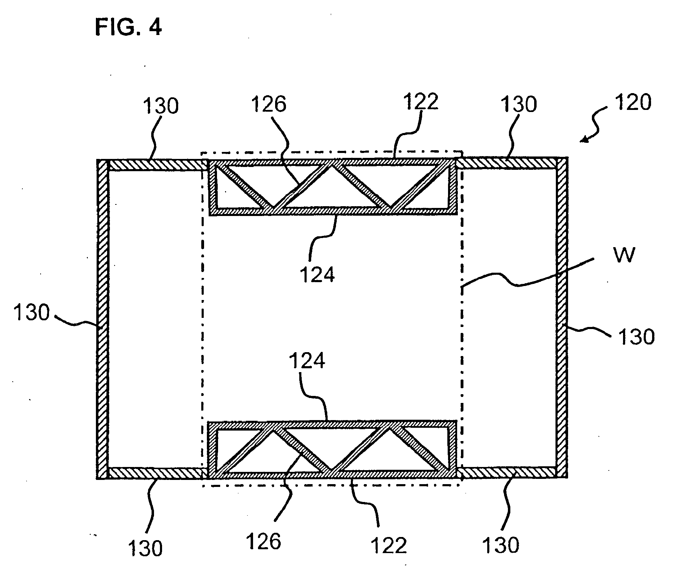

FIG. 3 shows an A-A cross-section of the shock absorbing device illustrated in FIG. 2, and FIG. 4 shows a B-B cross-section of the shock absorbing device illustrated in FIG. 2. As shown in FIG. 3, each surf ace of the pipe-like body of the energy absorber 120 is composed of a hollow shape member in which two opposing face plates (outer face plate) 122 and (inner face plate) 124 are connected via connecting plates 126. Since the four sides of the pipe-like body is composed of hollow shape members, the compressive load during collision of the railway car will not correspond to the axial direction of the energy absorber 120, so that even if a bending moment acts on the joint portion between the energy absorber 120 and the railway car structure (such as the underframe 5), the energy absorber 120 will not breakdown easily since the hollow shape member has a relatively high out-of-plane rigidity. Further, each surface of the energy absorber 120 is composed of a (outer) face plate 122, a (inner) face plate 124 and connecting plates 126, and the three plate portions collapse in the process of absorbing collision energy, so that greater collision energy can be absorbed. The effects of this structure to prevent breakdown and to absorb greater collision energy also apply to the following structures.

As shown in FIG. 4, the area in the leading end portion L1 of the energy absorber 120 is composed of hollow shape members and a closing plate 130 (not shown, including end closing plate 135), and the portion in which the perpendicular cross-sectional area in the longitudinal direction of the energy absorber 120 reduces is the area surrounded by the dashed-dotted line denoted as area W. In the area of the leading end portion L1, the upper and lower areas are composed of hollow shape members each having two opposing (outer) face plate 122 and (inner) face plate 124 connected via connecting plates 126 as illustrated, but there are no portions connecting the upper and lower face plates on the left and right sides thereof. A large portion of the collision energy absorbed during collision is absorbed by the crushing of the energy absorber 120 positioned within region W, and relatively small amount of energy is absorbed by the crushing (braking) of the closing plates 130. Since the above-mentioned structure enables to reduce the peak load occurring during collision, the strength of the portion of the railway car structure (such as the underframe 5) to which the shock absorbing device 100 composed of the energy absorber 120 is attached can be reduced, enabling the structure to be simplified and reduced in weight.

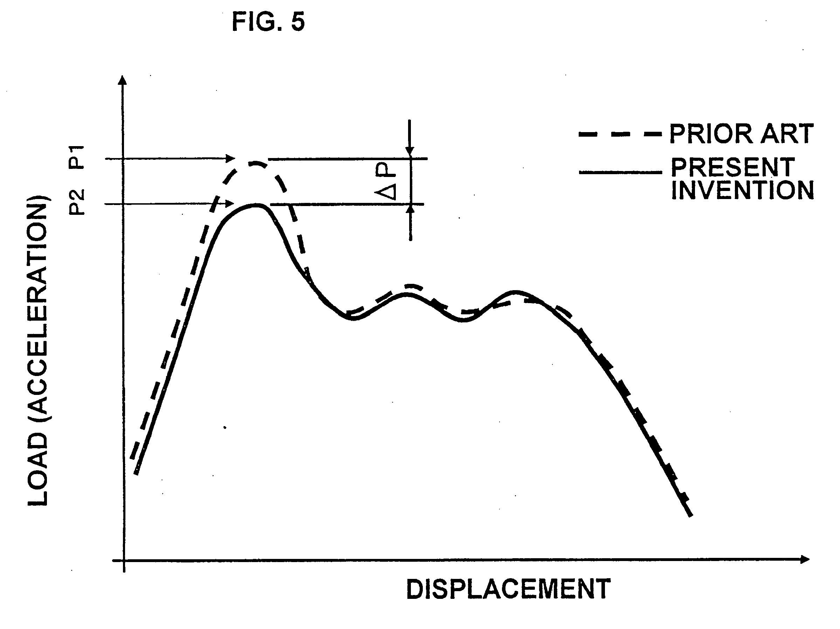

FIG. 5 is a graph showing the effect of reduction of peak load during collision according to the shock absorbing device described above. When the railway car collides against an object, the energy absorber 120 of the shock absorbing device 100 starts crushing by not the whole body of the energy absorber 120 but only the area of the leading portion L1 of the energy absorber 120 being immediately subjected to elastic deformation and than to plastic deformation. On the other hand, in the area of the main body portion L2 of the energy absorber 120, that is, the portion having the same structure as the prior art energy absorber in which the cross-sectional shape is distributed in continuous manner (has a continuous cross-section), the whole body of the energy absorber is subjected to elastic deformation and then starts crushing. Therefore, the peak load P2 of the energy absorber 120 according to the present invention is smaller by $\Delta P$ compared to the peak load P1 of the prior art energy absorber. The present effect of reducing the peak load is exerted even when the railway vehicle experiences collision at high speed, so that the present invention can be effectively applied to railway vehicles commercially operated at high speed.

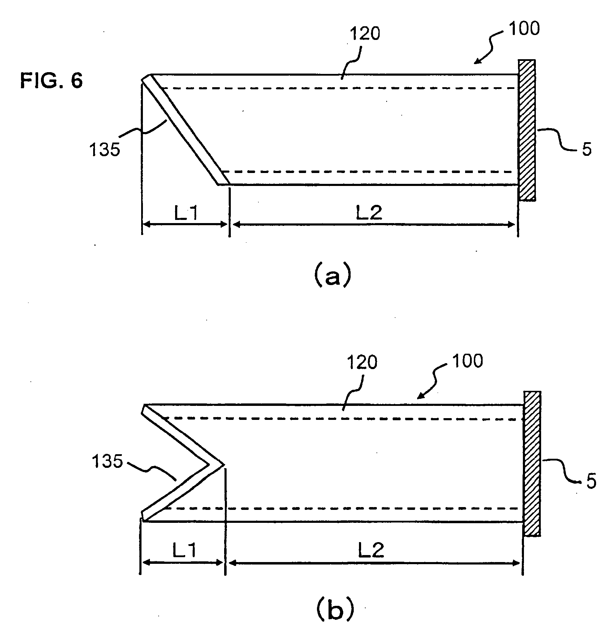

FIGS. 6(a) and 6(b) show other examples of upper views of other energy absorbers 120. These members are characterized in the upper surface shapes of the leading end portion L1 in which the perpendicular cross-sectional area with respect to the longitudinal direction of the energy absorber 120 varies. The upper surface shape of the leading end portion L1 can adopt a shape in which the end surface of the energy absorber 120 is cut away with a predetermined angle in the axial direction as shown in (a), or can adopt a shape in which the width-direction centre area of the leading end portion L1 of the energy absorber is pressed inward toward the base end portion thereof as shown in (b). Further, the effect of reducing the peak load during collision can also be exerted by attaching an end closing plate 135 as shown in FIG. 2 to the energy absorber 120 shown in FIGS. 6(a) or 6(b) so as to form a rectangular solid outer shape.

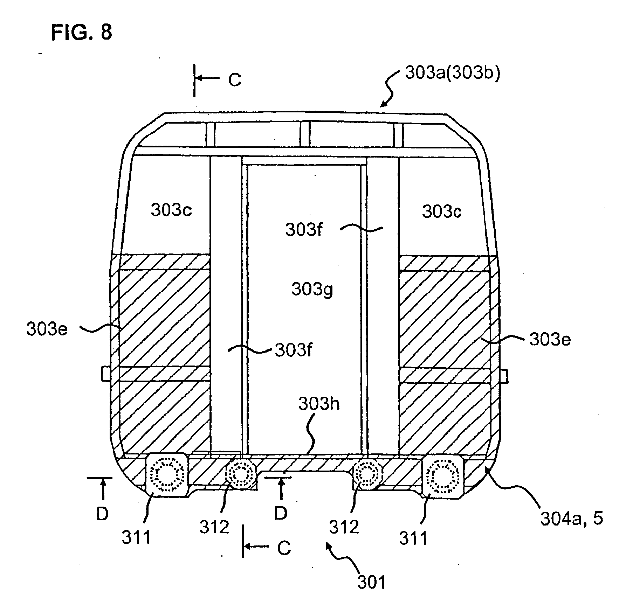

The first preferred embodiment of the invention illustrated in FIGS. 8 through 10 illustrate a collision energy absorbing device 301 applied to a car end structure 303a of the leading car adjacent to an intermediate car or to a car end structure 303b of intermediate cars. In a train set, a driver's seat 303d is sometimes provided in a space 303c disposed on both sides of a gangway 303g for moving from one car to another. In order to form the space 303c for the driver, a frame 303f is disposed to surround the space 303c, and on the front side is disposed a flying object blocking plate 303e (the portion shown with a hatching) for protecting the crew from objects such as small rocks flying toward them. The blocking plate 303e is formed by having left and right main plate portions connected via a lower end portion, and in the lower end portion are formed holes 303i, 303i, 303j and 303j through which the energy absorbers 311, 311, 312 and 312 are passed. The car end structures 303a and 303b have substantially similar functions as the end structures of the car body. The car end structures 303a and 303b are fixed via appropriate fixing means such as welding to the end portions of the main body of the car body. Upon viewing the car end structure 303a from the inner side of the car body, the floor surface 303h thereof is substantially flat and continuous with a floor surface 304b on the underframe 5.

According to the present embodiment, the shock absorbing device 301 is equipped with large-sized energy absorbers 311 and 311 that are attached on either side on the outer side in the width direction of the car body to the end plate 304a of the underframe 5 of the car body, and small-sized energy absorbers 312 and 312 attached close to the centre area in the width direction of the car body and separated from one another in the width direction of the car body. The respective energy absorbers 311 and 312 are disposed in a manner so that they are longitudinally extended along the longitudinal direction of the car body. The leading end portions of the energy absorbers 311 and 312 are arranged on the endmost side of the car body in the longitudinal direction of the whole car body. The base-end sides of the energy absorbers 311 and 312 are positioned closer to the centre of the longitudinal direction of the car body. Further, the energy absorbers 311 and energy absorbers 312 are arranged in a line crossing the longitudinal direction of the car body. In other words, the energy absorbers 311 and energy absorbers 312 are mutually arranged substantially in parallel along the width direction of the car body. Actually, the energy absorbers 311 and 312 are aligned so that the centre of the absorbers are positioned at the same height within the car body and distributed symmetrically with respect to the width direction of the car body. The respective energy absorbers 311 and 312 have the leading ends thereof covered with end closing plates 135a and 135b, and have the end plates 135c disposed on the base end side thereof fixed to the car body (underframe 5) by fastening the end plate 135c via fastening members 313 such as bolts and nuts to the end plate 304a of the underframe 5. The fastening members 313 can adopt other fastening means, or can perform fastening via welding. The energy absorbers 311 and 312 are formed as large-sized members and small-sized members, but they can be of the same size, or the arrangement of the large-sized members and small-sized members can be reversed with respect to the width direction of the car body, or the members can adopt other various designs.

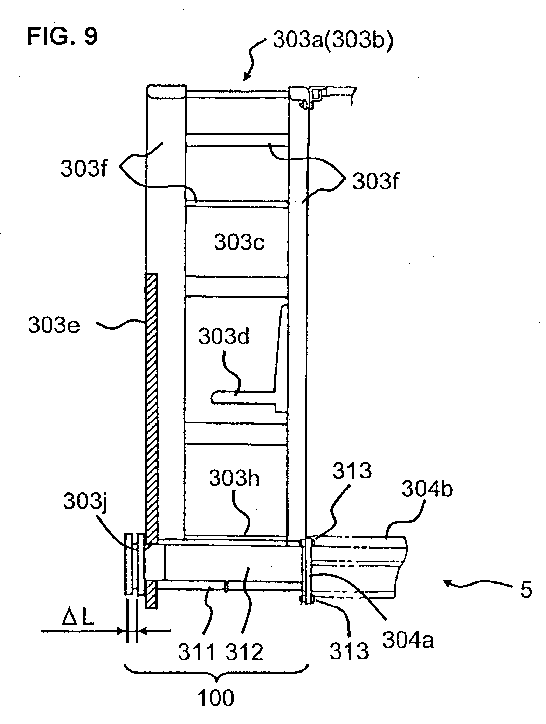

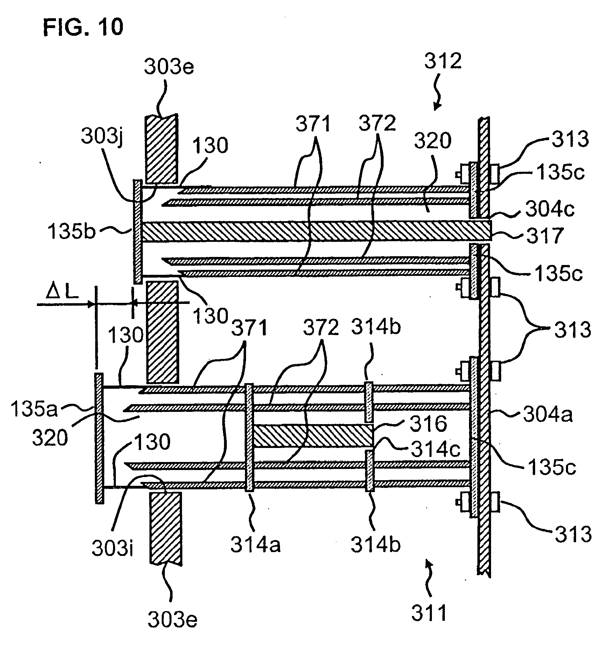

In the embodiment shown in FIG. 10, the large-sized energy absorber 311 has greater diameter and length than the small-sized energy absorber 312. The small-sized energy absorber 312 is designed to have a length so that the leading end of the energy absorber 312 occupies substantially the same position as the end of the car body (end surface of the flying object blocking plate 303e) when it is attached to the end plate 304a of the underframe 5. On the other hand, the large-sized energy absorber 311 has a length longer by length ΔL than the small-sized energy absorber 312. The energy absorbers 311 and 312 being attached to the end plate 304a of the underframe 5 are illustrated in overlapped manner in FIG. 9 and in an aligned manner in FIG. 10. The large-sized energy absorber 311 is slightly protruded (for approximately 100 mm, for example) from the end of the car body. When a large impact force is applied on the underframe 5 by collision, the underframe 5 can endure the load since the underframe 5 is rigid as described before. As described, though it is not necessary to vary the positions of all the leading end portions of the plurality of energy absorbers in the crushing direction, the leading end positions thereof should be disposed at longitudinally dispersed positions of the railway vehicle.

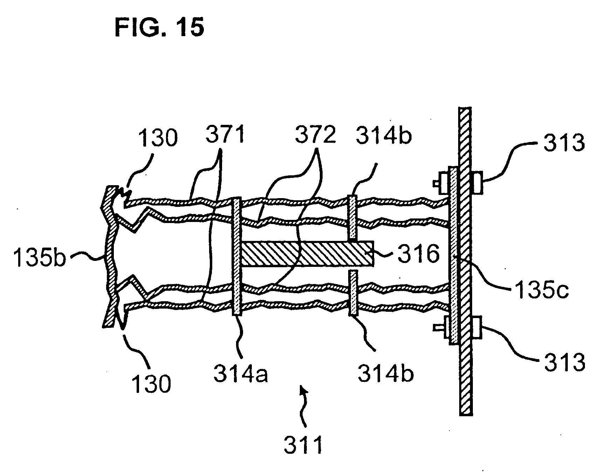

Therefore, at the time of collision, when collision energy absorbing devices are disposed in opposing manner to car end structures 303a and 303b of adjacent cars, the shock absorbing devices are respectively activated by the impact acting on the car body. The dispersion (ΔL) of the positions of leading ends of the energy absorbers 311 and 312 disposed on each car body causes the large-sized energy absorbers 311 and 311 on adjacent cars to collide against one another and start to crush. Thereafter, with a slight time difference, the small-sized energy absorbers 312 and 312 collide against one another and start to crush in a delayed manner. Now, the crushing of energy absorbers 311 and 312 will be described. For example, an actual crushing example of the energy absorber 311 illustrated in FIG. 10 is shown in FIG. 15 (having a buckling prevention member described later built therein, but now, it is referred to as an example showing how crushing is performed). The positions of cars when collision occurs are not strictly the same depending for example on whether the rails are linear or curved, but when adjacent cars collide against one another, it is assumed that they collide in the direction substantially corresponding to the longitudinal direction of the car body. In such case, the energy absorbers 311 and 312 are crushed in such a manner that the pipe-like bodies constituting the absorbers 311 and 312 are subj ected to repeated minute buckling in the axial direction, so that they are crushed substantially in a straight line while maintaining the axial lines thereof. The crushed shapes of the shock absorbers are, for example, compressed accordion structures. In other words, the energy absorbers 311 and 312 are not bent in two via entirely buckling in the whole longitudinal direction to form a V-shaped deformation, but are deformed in an accordion-like structure, so that they are capable of absorbing sufficient collision energy.

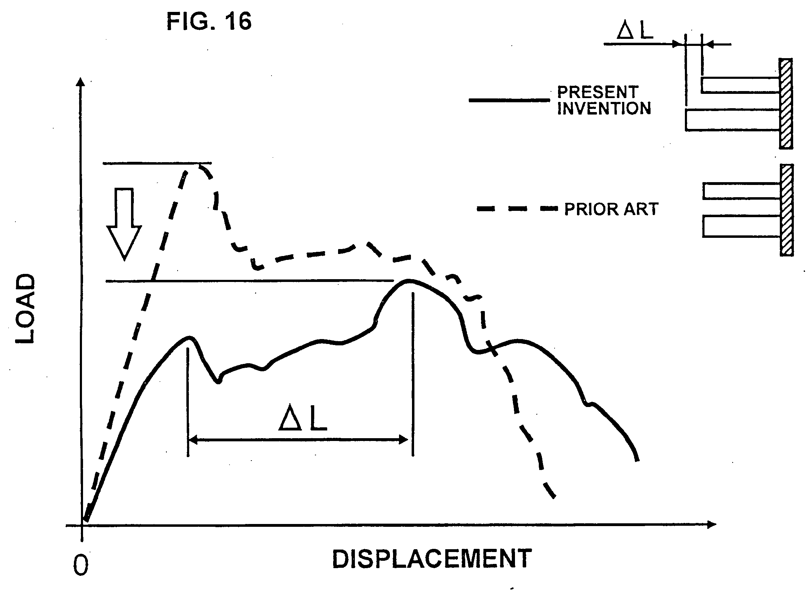

The slight difference in the timing at which the crushing starts of the different types of energy absorbers 311 and 312 causes the peak load to be dispersed, so that the crushing peak load of the collision energy absorbing device can be reduced, and the load applied on the main car body or the passengers and crew on board can be reduced. One example of the state of dispersion of peak load is illustrated in FIG. 16. As shown in FIG. 16, according to the prior art arrangement of energy absorbers, even when there are a plurality of energy absorbers, the leading ends thereof are aligned so that they started to crush simultaneously, and as a result, a very high peak load occurs at the time the crushing starts (refer to the dashed line in the graph of FIG. 16). On the other hand, according to the present embodiment in which the timings at which the crushing starts are varied according to the difference ΔL in the leading end positions due to the difference in the lengths of the energy absorbers 311 and 312, the timings at which the peak load occurs are dispersed. As a result, the load is reduced temporarily after the load of the energy absorber 311 activated at first experiences its peak, and thereafter, the load of the energy absorber 312 activated thereafter experiences a peak. Compared to the example where both the energy absorbers 311 and 312 are activated simultaneously, according to the present embodiment, the height of the peak load as a whole can be suppressed (refer to the solid line in the graph of FIG. 16). Furthermore, since the longitudinal cross-sectional areas of a single energy absorber differs between the leading end portion and the main body portion (portion on the base end side connected to the leading end portion), each energy absorber also has an effect to reduce the peak load. Therefore, the peak load acting on the railway vehicle during collision can be effectively reduced by the synergetic effect between the effect of reducing peak load realized by the plurality of energy absorbers and the effect of reducing peak load realized by each energy absorber. The above-described arrangement enables to reduce the peak load occurring at the time of collision, so that the railway car structure can be simplified and reduced in weight since the strength of the portion of the railway car structure (such as the underframe) to which the shock absorbing device 301 composed of the energy absorbers 311 and 312 is attached can be reduced.

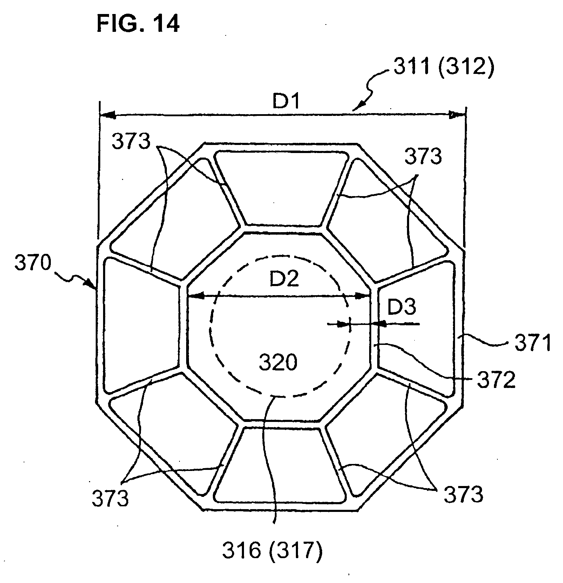

In the illustrated example, the energy absorbers 311 and 312 differ in cross-sectional size, but the inner structures thereof are similar. With reference to FIG. 14, one example of an energy absorber 311 (312) constituting one type of collision energy absorbing device will be described. Each energy absorber 311 (312) has a hollow structure 370 with an octagonal cross-sectional shape, which is formed for example of an extruded shape member formed of an aluminium alloy. The cross-sectional shape thereof includes an octagonal outer wall 371, an octagonal inner wall 372 having a similar shape as the outer wall 371, and a plurality of radial direction walls 373 connecting the vertex points of the inner and outer octagonal walls 371 and 372. An inner space having an octagonal cross-sectional shape is formed within the inner wall 372, and inner spaces having trapezoidal cross-sectional shapes separated by radial direction walls 373 are aligned annularly between the outer wall 371 and the inner wall 372. The octagonal inner space of each energy absorber 311 (312) constitutes space 320 (320), which is a space capable of having a buckling prevention member 316 (317) inserted thereto. Further, in the example illustrated in FIG. 14, the energy absorber 311 (312) is a hollow structure 370 with an octagonal cross-section, but the cross-sectional shape thereof is not restricted thereto, and the energy absorber can have other appropriate hollow cross-sectional shapes such as a square pipe shape or a cylindrical shape, wherein the inner and outer walls thereof are connected via multiple ribs constituting a truss structure, for example. The outer diameter D1 of the energy absorber 311 (312) is 180 mm to 210 mm, and the inner diameter D2 of the inner wall 372 is approximately 120 mm.

As shown in FIG. 10, buckling prevention members 316 and 317 are respectively inserted to the octagonal inner spaces 320 of the energy absorbers 311 and 312. (Here, the buckling prevention members are for preventing the buckling of the entirety of the energy absorber, and should be referred to as entirety buckling prevention members, but for convenience, they are simply referred to as buckling prevention members.) The buckling prevention members 316 and 317 restrict the deformation of the energy absorbers 311 and 312 so that they are crushed and deformed in an accordion-like shape in the axial direction. In other words, by inserting the buckling prevention members 316 and 317 into the energy absorbers 311 and 312, the energy absorbers 311 and 312 are prevented from being bent in two at the center portion at the start of deformation, and thus, they are prevented from losing their function as energy absorbers at an early stage due to entirety buckling.

The buckling prevention members 316 and 317 are aluminum alloy cylinders, and the lengths thereof can be determined arbitrarily. It is possible to form the buckling prevention members using materials such as fiber reinforced plastic (FRP) instead of aluminum alloy. In other words, the buckling prevention members 316 and 317 have somewhat higher flexural rigidity than the energy absorbers 311 and 312, but they do not necessarily have flexural rigidity equivalent to iron or other metal products, and should have sufficient flexural rigidity capable of guiding the energy absorbers 311 and 312 to crush in an accordion-like shape. Further, the buckling prevention members 316 and 317 can be a hollow pipe-like body or a solid body, as long as they have sufficient rigidity. Furthermore, the length of the buckling prevention member 316 disposed in the energy absorber 311 shown in FIG. 10 is set shorter than the length of the buckling prevention member 317 (longer than the length of the energy absorber 312) disposed in the energy absorber 312, but the lengths thereof are not restricted to such example and can be selected arbitrarily.

The energy absorber 311 illustrated in FIG. 10 has the buckling prevention member 316 arranged at the center thereof in the longitudinal direction. If the length of the energy absorber 311 is to be extended, joint plates 314a and 314b can be joined via fillet welding or other means (in other words, the energy absorber 311 can be divided into multiple parts via joint plates 314a and 314b). The buckling prevention member 316 disposed in the energy absorber 311 is fixed either to the joint plate 314a disposed near the end portion or to the joint plate 314b disposed at the base end side, and on the other one of the joint plates 314a and 314b is formed a hole 314c through which the buckling prevention member 316 can pass. The buckling prevention member 316 is disposed between the inner wall portion 372 and the hole 314c with an appropriate clearance therebetween, and when the energy absorber 311 is compressed, the buckling prevention member 316 moves in the axial direction with respect to the energy absorber 311, allowing the energy absorber 311 to deform in an accordion-like shape. Further, the clearance between the buckling prevention member 316 and the inner wall 372 is large enough so as not to interfere with the inner wall 372 when it deforms inwardly in an accordion-like shape. That is, as shown in FIG. 14, a clearance of approximately 15 mm referred to as dimension D3 is provided between the buckling prevention member 316 (317) and the inner wall 372, so that a total allowance of 30 mm is formed on the sides thereof. The end having the joint plate 314b of the buckling prevention member 316 can be inserted to the hole 314c of the joint plate 314b. As described, if the end of the buckling prevention member 316 is inserted to the hole 314c of the joint plate 314b, the hole 314c functions as a guide for the buckling prevention member 316, enabling the buckling prevention member 316 to move smoothly in the longitudinal direction of the car body. In this arrangement, as shown in FIG. 15, when an impact caused by collision acts on the energy absorber 311, the energy absorber 311 will start to deform via buckling. When the whole body of the energy absorber 311 attempts to bend via entirety buckling at the longitudinal center portion thereof into the form of a V-shape, the buckling prevention member 316 prevents such deformation and guides the whole body of the energy absorber 311 to be deformed in an accordion-like shape. Further, FIG. 15 illustrates the state of crushing, and the cross-section reduced portion (leading end portion L1 of the energy absorbing device) for promoting crushing so as to reduce the peak load is omitted from the drawing. The leading end portion L1 is positioned at the left hand side of FIG. 15 illustrating the state in which the closing plate 130 constituting the leading end portion L1 is being crushed. Of course, the cross-section reduced portion (leading end portion L1 of the energy absorbing device) for promoting crushing so as to reduce the peak load can be applied to a shock absorbing device equipped with a buckling prevention member 16.

In FIG. 10, a single buckling prevention member 317 is inserted to an inner space 320 of the energy absorber 312, which is fixed via welding to the end closing plate 135b. The rear end of the buckling prevention member 317 is passed through a hole 304c formed on the end plate 304a of the underframe. According to this arrangement, when the energy absorber 312 receives impact and starts to deform via buckling, the buckling prevention member 317 moves in the axial direction with respect to the energy absorber 312, preventing entirety buckling of the energy absorber 312 and crushing the absorber 312 in an accordion-like shape.

The hole 304c on the end plate 304a of the underframe 5 functions as a guide for the buckling prevention member 317 similar to the hole 314c of the joint plate 314b, and realizes a smooth accordion-like deformation of the energy absorber 312. Further, the clearance (space 320) between the inner wall 372 of the energy absorber 312 and the buckling prevention member 317 should preferably be large enough to ensure the accordion-like deformation of the inner wall 372. As described, though the buckling prevention member 317 itself does not contribute directly to absorbing energy, it functions to deform the energy absorber 312 into an accordion-like shape.

In the embodiment illustrated in FIG. 10, a cross-section reduced portion (leading end portion L1 of the energy absorbing device) for promoting crushing so as to reduce the peak load is provided on the left hand side of the energy absorbers 311 and 312 respectively.

Therefore, in order for the energy absorbers 311 and 312 to function as shock absorbing devices during collision of the vehicle, the leading end portion L1 of the energy absorber 311 starts to crush, and thereafter, the leading end portion L1 of the energy absorber 312 starts to crush, then the base end portions of the energy absorbers 311 and 312 are sequentially crushed thereafter. As described, since each energy absorber has an effect to reduce the peak load, the peak load acting on the railway vehicle during collision can be reduced significantly in collaboration with the effect to reduce the peak load by positioning the leading ends of a plurality of energy absorbers in dispersed manner.

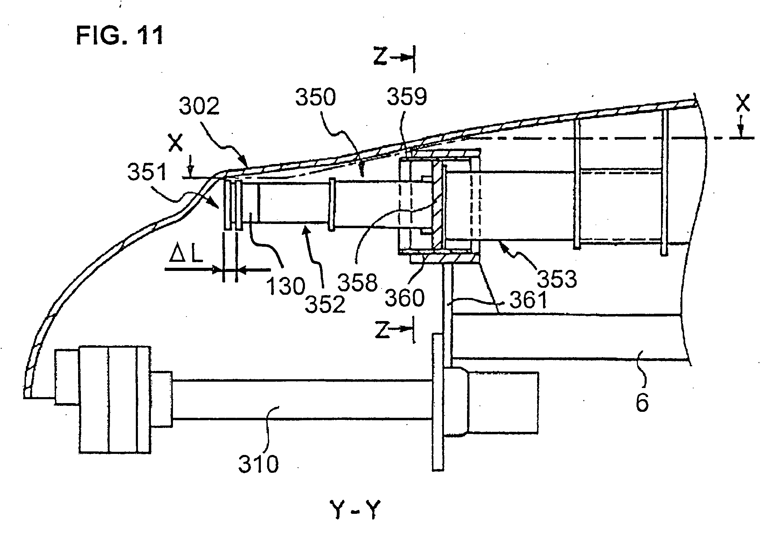

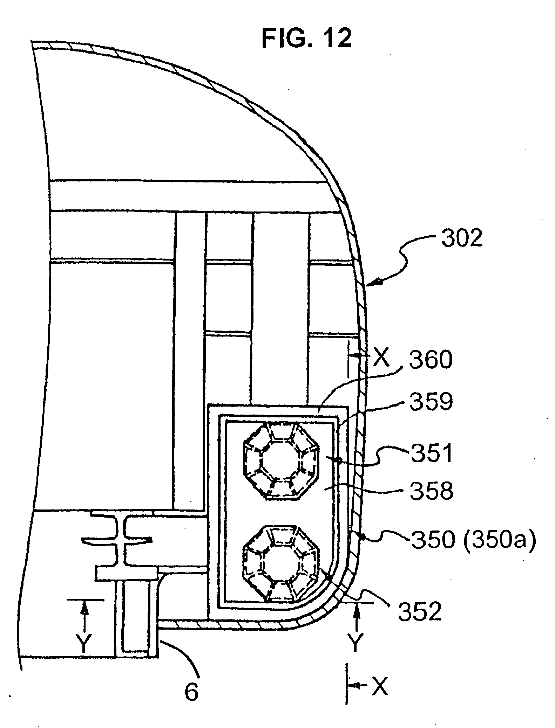

Next, with reference to FIGS. 11 and 12, a second embodiment of the collision energy absorbing device according to the present invention and the leading car of the railway vehicle to which the energy absorbing device is applied are illustrated.

A leading end portion 302 of the leading car has a curved surface which is projected frontward. Collision energy absorbing devices 301 are disposed at the rear end of the leading car and at the front end of the intermediate car, respectively, and a collision energy absorbing device 350 is disposed at the leading end portion 302 for absorbing a portion of the collision energy generated when collision occurs between the leading end and an obstacle or the like. On the front end of the leading end portion 302 of the leading car is disposed a coupler 310.

As shown in FIGS. 11 and 12, shock absorbing devices 350 (350a) are attached to the leading car in a given region of the leading portion 302 in the longitudinal direction of the car body and distanced from each other in the width direction of the car body. Actually, two shock absorbing devices 350a and 350b having the same structure are arranged symmetrically at left and right sides in the width direction of the car body. In the illustrated example, only one side is illustrated and the other side is omitted. Each of the shock absorbing devices 350a and 350b disposed on the left and right sides of the car has a two-level (upper and lower level) structure. Each of the upper and lower levels has a first energy absorber 351 and a second energy absorber 352 placed at the leading end sides thereof for crushing and absorbing the collision energy during collision. Similar to the first embodiment, the first energy absorber 251 and the second energy absorber 252 adopt a pipe-like structure having an octagonal hollow cross-section as illustrated in FIG. 14, which are arranged so that the axis line of the pipes are parallel to the longitudinal direction (the front-rear direction or traveling direction) of the car body. Therefore, the shock absorbing devices 350a and 350b arranged at both sides of the car body have a total of four first and second energy absorbers 351 and 352 arranged at the leading end portion of the car body.

The first energy absorbers 351 and the second energy absorbers 352 arranged at two levels (upper and lower levels) are attached to a common support plate 358 at the farthest end from the crushing direction, that is, at the end toward the center in the longitudinal direction of the car body. The energy absorbers 351 and 352 are commonly connected to a single third energy absorber 353 disposed at the rear end portion (end closer to the center in the longitudinal direction of the car body) of the support plate 358. The third energy absorber 353 is connected to the underframe 5 via a structure frame 354 of the car body at the rear side thereof (the end closer to the center in the longitudinal direction of the car body). The cross-sections of the first, second and third energy absorbers 351, 352 and 353 are designed so that the absorber disposed rearward (toward the center in the longitudinal direction of the car body) has a larger cross-sectional area.

The common support plate 358 is fixed to a guide pipe 359 having the surrounding sides formed substantially in the shape of a square pipe. An outer circumference surface 359a of the guide pipe 359 is fit in a slidable manner to an inner side 360a of a guide pipe plate 360 attached to the car body. Thus, at the time of collision, at first, the first and second energy absorbers 351 and 352 are deformed and crushed to absorb a predetermined amount of energy, and thereafter, the third energy absorber 353 starts to deform, by which the guide pipe 359 together with the common support plate 358 is moved toward the rear side of the car body being guided by the guide pipe plate 360. When collision energy is completely absorbed by the crushing of the first and second energy absorbers 351 and 352, the third energy absorber 353 will not deform. Since the first energy absorber 351 and the second energy absorber 352 are guided via the inner surface 360a of the guide pipe plate 360, they are not buckled at the center portion (corresponding to the position of the guide pipe plate 360), and they can exert the function of absorbing collision energy using their whole lengths. The guide pipe 359 and the guide pipe plate 360 constitute a slide guide in the present invention. The guide pipe plate 360 is placed at the front end of the underframe 5 (center beam 6). The area rearward from the guide pipe plate 360 is the driver's seat. The front end of the driver's seat is covered by a flying object blocking plate 361. The guide pipe plate 360 can be described as a hole opening in the flying object blocking plate 361. The first, second and third energy absorbers 351, 352 and 353 are prevented from being buckled in V-shapes, and their functions to absorb collision energy are maintained.

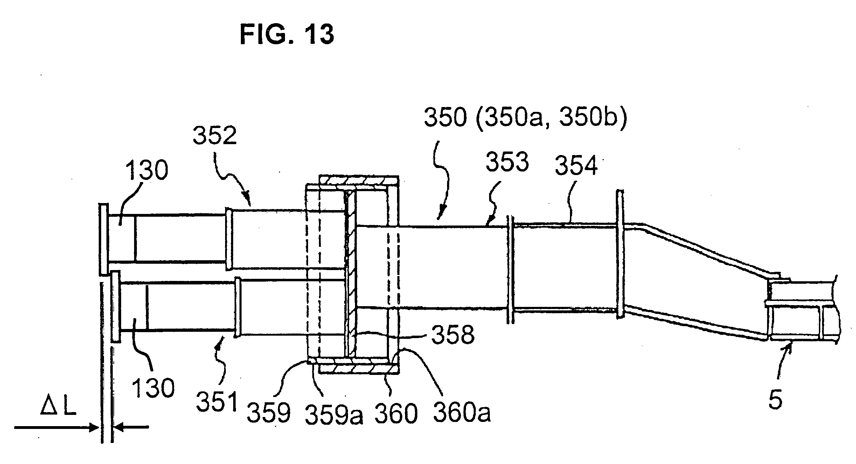

As illustrated in FIG. 13, the leading end positions of the first and second energy absorbers 351 and 352 in the direction of collision are dispersed in multiple positions, similar to the case of the collision energy absorbing device positioned at the end of the car body. That is, the lengths of the first and second energy absorbers 351 and 352 are slightly varied in the direction of collision, and in the state in which the absorbers are supported on a common support plate 358, the leading end position of the first energy absorber 351 is slightly positioned frontward by distance ∆L (approximately 100 mm, for example) than the leading end position of the second energy absorber 352. By this difference in the leading end positions (∆L), when the leading car experiences collision, the first energy absorber 351 starts crushing before the second energy absorber 352. By this slight difference in the timing in which the crushing starts, the peak load is dispersed, the crushing peak load of the energy absorbers 351 and 352 is reduced, and the load applied on the car body and the passengers can be reduced. Of course, the structures of the energy absorbers 351 through 354 can be designed to correspond to the structures of the energy absorbers illustrated in FIGS. 8 through 10.

In the embodiment of FIG. 13, impact force is applied on the energy absorbers 351, 352 and 353. The energy absorbers 351 and 352 have a cross-section reduced portion (leading end portion L1 of the energy absorbing device covered by the closing plate 130) for promoting crushing and reducing the peak load. Therefore, when the vehicle experiences collision and the energy absorbers 351 and 352 function as shock absorbing devices, at first, the leading end portion L1 of the energy absorber 352 starts to crush, then the leading end portion L1 of the energy absorber 351 starts to crush, and thereafter, the base end portions of the energy absorbers 352 and 351 start to crush sequentially. Thus, the respective energy absorbers each have an effect to reduce the peak load, and in addition, the plurality of energy absorbers having their leading end positions dispersed realize a peak load reducing effect throughout the plurality of energy absorbers, so that the peak load acting on the railway vehicle during collision can be effectively reduced. The peak load occurring during collision can be minimized according to the above-described arrangement, so that the portion of the railway vehicle structure having the shock absorbing device 350 composed of energy absorbers 351 and 352 can be minimized, according to which the structure can be simplified and reduced in weight.

## Claims

1.   A railway vehicle having a shock absorbing device (301; 350) including an energy absorber (311, 312; 351, 352) for absorbing collision energy by crushing during collision, wherein
the energy absorber (311, 312; 351, 352) has a pipe-like body (370) with a hollow structure in the interior thereof, the axial direction thereof arranged to correspond to a longitudinal direction of the railway vehicle; and
the energy absorber (311, 312; 351, 352) has one longitudinal end fixed to the railway vehicle, and has a portion in which a perpendicular cross-sectional area with respect to the longitudinal direction of the energy absorber (311, 312; 351, 352) is reduced toward the other end of the energy absorber (311, 312; 351, 352),

characterized in that:-

the shock absorbing device (301; 350) is composed of a plurality of said energy absorbers (311, 312; 351, 352);

the plurality of energy absorbers (311, 312; 351, 352) are arranged in a row in the direction orthogonal to the longitudinal direction of the railway vehicle;

the energy absorbers (311, 312; 351, 352) are aligned so that the crushing directions thereof correspond to the longitudinal direction of the railway vehicle; and

the leading end portions in the crushing directions of the plurality of energy absorbers (311, 312; 351, 352) are arranged at dispersed positions in the longitudinal direction of the railway vehicle.

2. The railway vehicle having a shock absorbing device (301; 350) according to claim 1, wherein the energy absorber (311, 312; 351, 352) has one longitudinal end having a portion in which the perpendicular cross-sectional area with respect to the longitudinal direction of the energy absorber (311, 312; 351, 352) is constant; and the energy absorber (311, 312; 351, 352) has a portion integrally connected to the above portion in which the perpendicular cross-sectional area with respect to the longitudinal direction of the energy absorber (311, 312; 351, 352) is reduced toward the other end of the energy absorber.

3. The railway vehicle having a shock absorbing device (301; 350) according to claim 1 or claim 2, wherein the displacement of the energy absorber (311, 312; 351, 352) at the time of crushing in the direction of crushing is guided via a slide guide (359, 360) disposed on a car body.

4. The railway vehicle having a shock absorbing device (301; 350) according to claim 1 or claim 2, wherein the energy absorber (311, 312; 351, 352) has a pipe-like body with a space extended in the longitudinal direction in the interior thereof; and a buckling prevention member (316, 317) for preventing entirety buckling of the energy absorber (311, 312; 351, 352) is disposed within the space.

5. The railway vehicle with a shock absorber device (301; 350) according to claim 3 or 4, wherein the shock absorbing device (301, 350) is disposed on a leading end portion on a leading car or an end car of the railway vehicle or an end region adjacent to another car in a train set, so that the axis line of the pipe-like body corresponds to the longitudinal direction of the railway vehicle.

6. The railway vehicle having a shock absorbing device (301; 350) according to claim 3 or 4, wherein the car body of the railway vehicle comprises a main car body and a car end structure disposed on a car end portion of the main car body; the car end structure which is crushable at the time of collision is attached removably to the car end portion of the main car body; and the energy absorber (311, 312; 351, 352) is disposed below a floor portion of the car end structure.

7. The railway car having a shock absorbing device (301; 350) according to claim 1 or claim 2, wherein the portion where the perpendicular cross-sectional area with respect to the longitudinal direction of the energy absorber (311, 312; 351, 352) reduces is formed by cutting away in a slanted manner the end portion of the portion having a constant perpendicular cross-sectional area with respect to the longitudinal direction of the energy absorber (311, 312; 351, 352).

8. The railway vehicle having a shock absorbing device (301; 350) according to claim 7, wherein the portion formed by cutting away the end portion in a slanted manner is covered via a closing plate (130).

9. The railway vehicle having a shock absorbing device (301; 350) according to claim 7 or claim 8, wherein the pipe-like body of the energy absorber (311, 312; 351, 352) is formed of an extruded shape member (370) having an outer wall portion (371), an inner wall portion (372) disposed in the interior of the outer wall portion (371), and a plurality of radial wall portions (373) connecting the outer wall portion (371) and the inner wall portion (372).

**Patentansprüche**

1. Schienenfahrzeug mit einer stoßabsorbierenden Vorrichtung (301; 350), die einen Energieabsorber (311, 312; 351, 352) zum Absorbieren von Kollisionsenergie durch Brechen während einer Kollision enthält, wobei der Energieabsorber (311, 312; 351, 352) einen rohrförmigen Körper (370) mit einer Hohlstruktur in dessen Inneren aufweist, wobei dessen axiale Richtung angeordnet ist, um mit einer Längsrichtung des Schienenfahrzeugs übereinzustimmen; und der Energieabsorber (311, 312; 351, 352) ein Längsende aufweist, das an dem Schienenfahrzeug befestigt ist, und einen Abschnitt aufweist, in dem ein bezüglich der Längsrichtung des Energieabsorbers (311, 312; 351, 352) senkrechter Querschnittsbereich hin zu dem anderen Ende des Energieabsorbers (311, 312; 351, 352) verringert ist, **dadurch gekennzeichnet, dass**:

die stoßabsorbierende Vorrichtung (301; 350) aus mehreren der Energieabsorber (311, 312; 351, 352) besteht;

die mehreren Energieabsorber (311, 312; 352) in einer Reihe in Richtung orthogonal zu der Längsrichtung des Schienenfahrzeugs angeordnet sind;

die Energieabsorber (311, 312; 351, 352) so ausgerichtet sind, dass deren Brechrichtungen mit der Längsrichtung des Schienenfahrzeugs übereinstimmt; und

die führenden Endabschnitte in den Brechrichtungen der mehreren Energieabsorber (311, 312; 351, 352) an verteilten Stellen in der Längsrichtung des Schienenfahrzeugs angeordnet sind.

2. Schienenfahrzeug mit einer stoßabsorbierenden Vorrichtung (301; 350) nach Anspruch 1, wobei der Energieabsorber (311, 312; 351, 352) ein Längsende mit einem Abschnitt aufweist, in dem der bezüglich der Längsrichtung des Energieabsorbers (311, 312; 351, 352) senkrechte Querschnittsbereich konstant ist; und der Energieabsorber (311, 312; 351, 352) einen Abschnitt aufweist, der einstückig mit dem obigen Abschnitt verbunden ist, in dem der bezüglich der Längsrichtung des Energieabsorbers (311, 312; 351, 352) senkrechte Querschnittsbereich hin zu dem anderen Endes des Energieabsorbers verringert ist.

3. Schienenfahrzeug mit einer stoßabsorbierenden Vorrichtung (301; 350) nach Anspruch 1 oder Anspruch 2, wobei die Verrückung des Energieabsorbers (311, 312; 351, 352) zum Zeitpunkt des Brechens in der Brechrichtung über eine an dem Waggonkörper angeordnete Gleitführung (359, 360) geführt wird.

4. Schienenfahrzeug mit einer stoßabsorbierenden Vorrichtung (301; 350) nach Anspruch 1 oder Anspruch 2, wobei der Energieabsorber (311, 312; 351, 352) einen rohrförmigen Körper mit einem Raum aufweist, der in dessen Innerem in der Längsrichtung verläuft; und ein Knickverhinderungsmittel (316, 317), um ein Knicken des innerhalb des Raums angeordneten Energieabsorbers (311, 312; 351, 352) in seiner Gänze zu verhindern.

5. Schienenfahrzeug mit einer stoßabsorbierenden Vorrichtung (301; 350) nach Anspruch 3 oder Anspruch 4, wobei die stoßabsorbierende Vorrichtung (301, 350) an einem führenden Endabschnitt an einem führenden Waggon oder einem abschließenden Waggon des Schienenfahrzeugs oder an einem Endbereich neben einem anderen Waggon in einer Zugfolge angeordnet ist, so dass die Achslinie des rohrförmigen Körpers mit der Längsrichtung des Schienenfahrzeugs übereinstimmt.

6. Schienenfahrzeug mit einer stoßabsorbierenden Vorrichtung (301; 350) nach Anspruch 3 oder Anspruch 4, wobei der Waggonkörper des Schienenfahrzeugs einen Hauptwaggonkörper und eine Waggonendstruktur umfasst, die an einem Waggonendabschnitt des Hauptwaggonkörpers angeordnet ist; die Waggonendstruktur, die zum Zeitpunkt einer Kollision brechbar ist, lösbar an den Waggonendabschnitt des Hauptwaggonkörpers angebracht ist; und der Energieabsorber (311, 312; 351, 352) unterhalb eines Bodenabschnitts der Waggonendstruktur angeordnet ist.

7. Schienenfahrzeug mit einer stoßabsorbierenden Vorrichtung (301; 350) nach Anspruch 1 oder Anspruch 2, wobei der Abschnitt, in dem der bezüglich der Längsrichtung des Energieabsorbers (311, 312; 351, 352) senkrechte Querschnittsbereich sich verringert, durch schräges Wegschneiden des Endabschnitts von dem Abschnitt, der einen konstanten senkrechten Querschnitt bezüglich der Längsrichtung des Energieabsorbers (311, 312; 351, 352) aufweist, gebildet ist.

8. Schienenfahrzeug mit einer stoßabsorbierenden Vorrichtung (301; 350) nach Anspruch 7, wobei der durch schräges Wegschneiden des Endabschnitts gebildete Abschnitt mittels einer Abschlussplatte 130 abgedeckt ist.

9. Schienenfahrzeug mit einer stoßabsorbierenden Vorrichtung (301; 350) nach Anspruch 7 oder Anspruch 8, wobei der rohrförmige Körper des Energieabsorbers (311, 312; 351, 352) aus einem extrudierten Formteil (370) gebildet ist, das einen Außenwandabschnitt (371), einen im Inneren des Außenwandabschnitts (371) angeordneten Innenwandabschnitt (372) und mehrere radiale Wandabschnitte (373) umfasst, die den Außenwandabschnitt (371) und den Innenwandabschnitt (372) verbinden.

## Revendications

1. Véhicule ferroviaire comprenant un dispositif d'absorption de chocs (301 ; 350) comprenant un absorbeur d'énergie (311, 312 ; 351, 352) pour absorber l'énergie de collision par écrasement au cours de la collision, dans lequel l'absorbeur d'énergie (311, 312 ; 351, 352) présente un corps en forme de tuyau (370) avec une structure creuse à l'intérieur de celui-ci, sa direction axiale étant prévue de façon à correspondre à une direction longitudinale du véhicule ferroviaire, et

l'absorbeur d'énergie (311, 312 ; 351, 352) a une extrémité longitudinale fixée au véhicule ferroviaire, et a une partie dans laquelle une surface en coupe transversale perpendiculaire par rapport à la direction longitudinale de l'absorbeur d'énergie (311, 312 ; 351, 352) est réduite en direction de l'autre extrémité de l'absorbeur d'énergie (311, 312 ; 351, 352),

**caractérisé en ce que** :

le dispositif d'absorption de chocs (301 ; 350) est constitué d'une pluralité desdits absorbeurs d'énergie (311, 312 ; 351, 352),

la pluralité d'absorbeurs d'énergie (311, 312 ; 351, 352) sont disposés sur une rangée dans la direction orthogonale à la direction longitudinale du véhicule ferroviaire,

les absorbeurs d'énergie (311, 312 ; 351, 352) sont alignés de sorte que les directions d'écrasement de ceux-ci correspondent à la direction longitudinale du véhicule ferroviaire, et

les parties d'extrémité avant dans les directions d'écrasement de la pluralité d'absorbeurs d'énergie (311, 312 ; 351, 352) sont disposées à des positions dispersées dans la direction longitudinale du véhicule ferroviaire.

2. Véhicule ferroviaire comportant un dispositif d'absorption de chocs (301 ; 350) selon la revendication 1, dans lequel

l'absorbeur d'énergie (311, 312 ; 351, 352) a une extrémité longitudinale présentant une partie dans laquelle la surface en coupe transversale perpendiculaire par rapport à la direction longitudinale de l'absorbeur d'énergie (311, 312 ; 351, 352) est constante, et

l'absorbeur d'énergie (311, 312 ; 351, 352) a une partie solidaire de la partie ci-dessus dans laquelle la surface en coupe transversale perpendiculaire par rapport à la direction longitudinale de l'absorbeur d'énergie (311, 312 ; 351, 352) est réduite en direction de l'autre extrémité de l'absorbeur d'énergie.

3. Véhicule ferroviaire comportant un dispositif d'absorption de chocs (301 ; 350) selon la revendication 1 ou la revendication 2, dans lequel

le déplacement de l'absorbeur d'énergie (311, 312 ; 351, 352) au moment de l'écrasement dans la direction de l'écrasement est guidé par l'intermédiaire d'un guide de coulissement (359, 360) disposé sur un corps de voiture.

4. Véhicule ferroviaire comportant un dispositif d'absorption de chocs (301 ; 350) selon la revendication 1 ou la revendication 2, dans lequel

l'absorbeur d'énergie (311, 312 ; 351, 352) présente un corps en forme de tuyau avec un espace s'étendant dans la direction longitudinale à l'intérieur de celui-ci, et

un élément de prévention contre le flambage (316, 317) pour empêcher le flambage complet de l'absorbeur d'énergie (311, 312 ; 351, 352) est disposé dans l'espace.

5. Véhicule ferroviaire comportant un dispositif d'absorption de chocs (301 ; 350) selon la revendication 3 ou 4, dans lequel

le dispositif d'absorption de chocs (301 ; 350) est disposé sur une partie d'extrémité avant d'une voiture de tête ou d'une voiture de queue du véhicule ferroviaire ou une région d'extrémité adjacente à une autre voiture dans une rame, de sorte que la ligne axiale du corps en forme de tuyau correspond à la direction longitudinale du véhicule ferroviaire.

6. Véhicule ferroviaire comportant un dispositif d'absorption de chocs (301 ; 350) selon la revendication 3 ou 4, dans lequel

le corps de voiture du véhicule ferroviaire comporte un corps de voiture principal et une structure d'extrémité de voiture disposée sur une partie d'extrémité de voiture du corps de voiture principal,

la structure d'extrémité de voiture qui est susceptible d'être écrasée au moment de la collision est fixée de manière amovible à la partie d'extrémité de voiture du corps de voiture principal, et

l'absorbeur d'énergie (311, 312 ; 351, 352) est disposé au-dessous d'une partie de plancher de la structure d'extrémité de voiture.

7. Véhicule ferroviaire comportant un dispositif d'absorption de chocs (301 ; 350) selon la revendication 1 ou la revendication 2, dans lequel

la partie où la surface en coupe transversale perpendiculaire par rapport à la direction longitudinale de l'absorbeur d'énergie (311, 312 ; 351, 352) se réduit est formée en découpant de manière oblique la partie d'extrémité de la partie ayant une surface en coupe transversale perpendiculaire constante par rapport à la direction longitudinale de l'absorbeur d'énergie (311, 312 ; 351, 352).

8. Véhicule ferroviaire comportant un dispositif d'absorption de chocs (301 ; 350) selon la revendication 7, dans lequel

la partie formée par la découpe de la partie d'extrémité d'une manière oblique est recouverte par une plaque de fermeture (130).

9. Véhicule ferroviaire comportant un dispositif d'absorption de chocs (301 ; 350) selon la revendication 7 ou la revendication 8, dans lequel

le corps en forme de tuyau de l'absorbeur d'énergie (311, 312 ; 351, 352) est formé d'un élément de forme extrudé (370) ayant une partie de paroi extérieure (371), une partie de paroi intérieure (372) disposée à l'intérieur de la partie de paroi extérieure (371), et une pluralité de parties de paroi radiale (373) reliant la partie de paroi extérieure (371) et la partie de paroi intérieure (372).

FIG. 1

FIG. 2

**FIG. 3**

## FIG. 4

FIG. 5

FIG. 6

(a)

(b)

EP 2 236 380 B1

FIG. 7

## FIG. 8

## FIG. 9

## FIG. 10

FIG. 11

Y-Y

EP 2 236 380 B1

**FIG. 12**

302

X 360

359

351

358

350 (350a)

352

Y

X

6

Y

FIG. 13

350 (350a, 350b)
353 354
358
359 359a 360 360a
351
352
130
130
ΔL
5

**FIG. 14**

311 (312)

D1

373

373

370

D2

D3

320

371

372

373

373

316 (317)

# FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007302081 A
- DE 19833250 A
- EP 1251054 A